# EUROPÄISCHE PATENTSCHRIFT

(11) **EP 3 797 232 B1**
(45) Veröffentlichungstag und Bekanntmachung des Hinweises auf die Patenterteilung: **06.07.2022**
(21) Anmeldenummer: 19727997.9
(22) Anmeldetag: 28.05.2019
(51) Int. Cl.: F16J 9/06

(54) **MEHRTEILIGER ÖLABSTREIF-KOLBENRING MIT VERRINGERTER REIBUNG**
MULTI-PIECE OIL SCRAPER RING WITH REDUCED FRICTION
SEGMENT DE PISTON À SEGMENT RACLEUR D'HUILE, EN PLUSIEURS PARTIES, À FAIBLE FROTTEMENT

(30) Priorität: 17.07.2018 DE 102018117198
(43) Veröffentlichungstag der Anmeldung: 31.03.2021
(73) Patentinhaber: Federal-Mogul Burscheid GmbH, 51399 Burscheid (DE)
(72) Erfinder: MACHLINER, Stephan, 51379 Leverkusen (DE); SHAHVERDI, Sina, 50354 Hürth (DE); BÄRENREUTER, Dirk, 51519 Odenthal (DE)
(74) Vertreter: Kurig, Thomas
(86) Internationale Anmeldenummer: PCT/EP2019/063741
(87) Internationale Veröffentlichungsnummer: WO 2020/015897

(56) Entgegenhaltungen:
- DE-B- 1 232 419
- DE-B1- 2 557 721
- JP-A- H09 264 426
- JP-U- H0 456 971
- US-A- 3 261 612
- US-A- 3 929 342

## Beschreibung

Die vorliegende Erfindung betrifft einen dreiteiligen Ölabstreif-Kolbenring mit im Vergleich zu herkömmlichen Kolbenringen verringerter Reibung.

Herkömmliche Ölabstreif-Kolbenringe bzw. Ölabstreifringe bzw. Ölringe umfassen üblicherweise einen Ring mit zwei Ölabstreifleisten, die überschüssiges Öl von der Zylinderinnenfläche eines Verbrennungsmotors abtragen sollen, bzw. einen definierten möglichst dünnen Ölfilm erzeugen sollen.

Es gibt verschiedene Arten von Ölabstreifringen, einfache Ölabstreifringe umfassen üblicherweise lediglich einen Ringkörper mit zwei auf der Außenfläche angeordneten Abstreifleisten. Weiter entwickelte Ausführungen betreffen Ölabstreifringe mit einer zusätzlichen Expanderfeder, die eine gleichmäßigere Abstreifwirkung entlang des gesamten Umfangs des Ölabstreifrings erreichen soll.

In einer weiteren Ausführungsform sind sogenannte dreiteilige Ölabstreifringe bekannt, bei denen zwei dünne scheibenförmige Abstreifringe von einem gemeinsamen Träger in einer Kolbenringnut gehalten werden, wobei der Träger oft auch die Funktion einer Expanderfeder übernimmt.

Aus dem amerikanischen Patent US 2656230 von 1953 ist ein dreiteiliger Ölabstreifring bekannt.

Auch aus der deutschen Patentanmeldung DE102016104853A1 ist ein dreiteiliger Ölabstreifring mit einer verringerten Reibung bekannt.

Dreiteilige Ölabstreifringe sind auch bekannt aus DE1232419 und JPH0456971U.

Es ist wünschenswert, die Reibung insbesondere von Verbrennungsmotoren zu verringern, um den Verbrauch von Kraftstoff zu senken. Es ist Ziel der vorliegenden Erfindung, den Reibungsverlust eines Verbrennungsmotors durch Verringern der Reibung, die von einem herkömmlichen dreiteiligen Ölabstreifring ausgeht, zu senken.

Die vorliegende Erfindung betrifft einen Kolbenring gemäß einem der unabhängigen Ansprüche, wobei vorteilhafte Ausführungen in den abhängigen Ansprüchen definiert sind.

Gemäß einem ersten Aspekt der vorliegenden Erfindung wird ein mehrteiliger Kolbenring mit einen oberen Abstreifring, einem unteren Stützring sowie einer Expanderfeder / Biegefeder bereitgestellt. Der obere Abstreifring weist zwei Flankenflächen, eine äußere Abstreiffläche bzw. -kante und eine innere Federanlagefläche auf. Die obere Flankenfläche soll dabei an einer oberen Kolbenringnutflanke anliegen, und die untere Flankenfläche an der Expanderfeder bzw Biegefeder anliegen. Der untere Stützring, weist zwei Flankenflächen auf, wobei eine obere Flankenfläche an der Expander- bzw Biegefeder anliegen soll und eine untere Flankenfläche an einer unteren Kolbenringnutflanke anliegen soll. Der Stützring weist ebenfalls die äußere Federanlagefläche auf, mit der der Stützring an der Expander-/ Biegefeder anliegen soll. Die Stützring-Innenfläche endet bei dieser Ausführung innen vor einem Nutgrund der Kolbenringnut.

Die Expanderfeder / Biegefeder soll an einer Oberseite an der unteren Flankenfläche des oberen Abstreifring anliegen. Die Expanderfeder / Biegefeder soll an einer Unterseite an jeweils der oberen Flankenfläche des unteren Stützrings anliegen. Die Expanderfeder / Biegefeder ist an einer Federinnenseite mit nach oben überstehenden Abstreifring-Anlagevorsprüngen versehen, die an der inneren Federanlagefläche des Abstreifrings anliegen und diesen nach außen gegen eine Zylinderinnenwand drücken sollen. Die Expanderfeder / Biegefeder ist an einer Federaußenseite mit nach unten überstehenden Stützring-Anlagevorsprüngen versehen, die an der äußeren Federanlagefläche des Stützrings anliegen und die Feder radial nach außen drücken bzw. radial nach innen abstützten sollen.

"Oben" bezeichnet hier und im Weiteren die Axialrichtung zum Brennraum bzw. Kolbenboden. "Unten" bezeichnet hier und im Weiteren die Axialrichtung zum Kurbelgehäuse bzw. zum Kolbenbolzen. "Innen" bezeichnet hier und im Weiteren die Radialrichtung zur Kolbenachse bzw. zur Symmetrieachse des Zylinders bzw. die Richtung zu einem Kolbenringnutgrund. "Außen" bezeichnet hier und im Weiteren die Radialrichtung zur Zylinderinnenfläche.

In dieser Konfiguration stützt der Stützring die Expanderfeder / Biegefeder in Radialrichtung nach innen und in Axialrichtung nach oben ab. In dieser Konfiguration wird der Abstreifring von der Expanderfeder / Biegefeder in Radialrichtung nach außen und in Axialrichtung nach oben gedrückt.

In einer erfindungsgemäßen Ausführungsform ist die Expanderfeder / Biegefeder als MF-Feder ausgeführt. Im Gegensatz zu den im Querschnitt im Wesentlichen T-Förmigen Standard-Mf-Federn, weist diese einen Doppel-L-förmigen Querschnitt auf, wobei die Radialschenkel des Doppel-L-förmigen Querschnitts zusammenfallen und sich innen ein Axialschenkel des Doppel-L-förmigen Querschnitts nach oben erstreckt und außen ein Axialschenkel nach unten erstreckt.

In einer weiteren beispielhaften und nicht beanspruchten Ausführungsform ist die Expanderfeder / Biegefeder als VF-Feder ausgeführt. Im Gegensatz zu herkömmlichen VF- Expanderfedern / -Biegefedern weist diese jedoch einen Z- bzw. S-förmigen Querschnitt auf. Es ist jedoch ebenfalls möglich eine U-förmige VF- Expanderfeder / -Biegefeder zu verwenden, bei der die Stützring-Anlagevorsprünge wie der Fuß oder der Endstrich eines kleinen "u" ausgeführt sind, und außen unten an der VF- Expanderfeder / -Biegefeder angeordnet sind.

Bei einer zusätzlichen beispielhaften und nicht beanspruchten Ausführungsform ist die Expanderfeder / Biegefeder als SS50-Feder ausgeführt. SS-50-Federn sind im Wesentlichen in Radialrichtung gewellte Blechstreifen, die an radial innenliegenden Abschnitte Ausformungen aufweisen, die als Anlagevorsprünge dienen. Bei herkömmlichen SS-50-Federn sind die Anlagevorsprünge gegenüberliegend angeordnet, bei der erfindungsgemäßen Variante der SS-50-Feder sind die Anlagevorsprünge hingegen versetzt zueinander angeordnet.

Bei einer beispielhaften Ausführungsform des mehrteiligen Kolbenrings umfasst der untere Stützring an den Stoßenden eine Eingriffsstruktur, welche die Stoßenden in Axialrichtung und/oder Radialrichtung zueinander ausrichtet. Die Expanderfeder / - Biegefeder kann vor allem bei einem unverschlissenen oberen Abstreifring so stark zusammengedrückt werden, dass sich der Stoßspalt schließt und beide Stoßenden aneinander liegen. Während des Einlaufens könnte es zu einem "Stoßbeißen" und zu einem verstärkten Verschleiß der Stoßenden des Stützrings kommen, wenn sich die Stoßenden gegeneinander in Axialrichtung oder Radialrichtung bewegen können. Um dies zu verhindern, kann eine Art Nut/Feder- oder Giebel/Kanal-Struktur verwendet werden, um eine derartige Bewegung der Stoßenden zueinander zu verhindern.

Bei einer weiteren beispielhaften Ausführung des Kolbenrings ist der untere Stützring so vorgespannt, dass die Stoßenden aneinander liegen oder gegeneinander gepresst werden. Im Gegensatz zu allen anderen Kolbenringen oder Kolbenringteilen, ist bei dieser Ausführungsform der Stützring komplett geschlossen, und das Stoßspiel beträgt immer 0. Dadurch kann eine definierte Abstützfläche für die Expanderfeder / -Biegefeder bereitgestellt werden. Ein weiterer Vorteil besteht darin, dass es ebenfalls möglich ist zu verhindern, dass eine Radial-Innenseite des Stützrings mit einem Kolbenringnutgrund in Kontakt treten kann.

Der größte Vorteil besteht jedoch darin, dass der Stützring deutlich dünner bzw. flacher ausgeführt werden kann, da er keine Federkraft aufbringen muss um die Expanderfeder / - Biegefeder nach außen zu drücken. In dieser Ausführung können die Kräfte einfach durch den geschlossenen Ring aufgebracht werden. Eine Radiusverringerung wäre hier nur möglich, wenn der Ring in eine Wellenform oder einer Nierenform verformt würde.

Bei der vorstehenden Ausführung kann ausgeschlossen werden, dass der untere Ring bzw. der Stützring mit der Zylinderwand in Kontakt treten kann. Diese Ausführung gestattet eine einfache und leichte Ausführung eines reibungsarmen mehrteiligen Ölabstreifrings.

Gemäß einem weiteren Aspekt der vorliegenden Erfindung wird ein mehrteiliger Kolbenring mit einen oberen Abstreifring, einem unteren Feder-Stützring sowie einer Expanderfeder / Biegefeder bereitgestellt. Der obere Abstreifring weist zwei Flankenflächen, eine äußere Abstreiffläche /-kante und eine innere Federanlagefläche auf. Die obere Flankenfläche soll dabei an einer oberen Kolbenringnutflanke anliegen, und die untere Flankenfläche an der Expander-/ Biegefeder anliegen.

Der untere Feder-Stützring weist einen L-förmigen Querschnitt auf. Ein Schenkel des L-förmigen Querschnitts ist als Radialschenkel in Radialrichtung nach außen ausgeführt und erstreckt sich im Wesentlichen parallel zu dem oberen Abstreifring.

Ein Schenkel des L-förmigen Querschnitts ist als Axialschenkel ausgeführt und verläuft in Axialrichtung, wobei der Axialschenkel an einer Innenseite des Feder-Stützrings angeordnet ist und sich nach oben in Richtung der Feder erstreckt. Eine Axialschenkelaußenseite (in Radialrichtung gesehen) bildet dabei eine Federanlagefläche.

Der untere Stützring bzw. der Radialschenkel, weist zwei Flankenflächen auf, wobei eine obere Radialschenkel-Flankenfläche an der Expander-/ Biegefeder anliegen soll und eine untere Radialschenkel-Flankenfläche an einer unteren Kolbenringnutflanke anliegen soll. Der Feder-Stützring weist an dem Axialschenkel eine innere Federanlagefläche auf, mit der der Feder-Stützring bzw. der Axialschenkel an der Expander-/ Biegefeder anliegen soll. Die Feder-Stützring-Innenfläche endet bei dieser Ausführung innen vor einem Kolbenringnutgrund.

Die Expanderfeder / Biegefeder soll mit einer Oberseite an der unteren Flankenfläche des oberen Abstreifring anliegen. Die Expanderfeder / Biegefeder soll an einer Unterseite an jeweils der oberen Flankenfläche des unteren Feder-Stützrings anliegen. Die Expanderfeder / Biegefeder ist an einer Federinnenseite mit nach oben überstehenden Abstreifring-Anlagevorsprüngen versehen, die an der inneren Federanlagefläche des Abstreifrings anliegen und diesen nach außen gegen eine Zylinderinnenwand drücken sollen. Die Expanderfeder / Biegefeder weist an der Federaußenseite keine nach unten überstehenden Stützring-Anlagevorsprünge auf sondern benötigt nur eine unteren inneren Bereich, der an der äußeren Federanlagefläche des Feder-Stützrings bzw. der Innenfläche des Axialschenkels anliegen und die Fieder radial nach außen drücken bzw. radial nach innen abstützten kann.

In einer beispielhaften Ausführungsform ist die Expanderfeder / Biegefeder als MF-Feder ausgeführt. Im Gegensatz zu einer herkömmlichen MF-Feder weist diese nur obere Anlagevorsprünge auf, wobei die untere Seite der MF-Feder eben und vorsprungslos ausgeführt ist, da der Axialschenkel des Federstützrings als Anlagefläche dient. Im Gegensatz zu der vorherigen Ausführung ist hier der Feder-Stützring mit den Anlagevorsprüngen bzw. dem Anlagevorsprung versehen. Hier weist die MF-Feder lediglich einen im Wesentlichen L-förmigen Querschnitt auf. Wobei sich in der Einhüllenden der MF-Feder ein Axialschenkel an der Innenseite eines Radialschenkels nach oben erstreckt.

Bei einer anderen beispielhaften Ausführung ist die Expanderfeder / Biegefeder als VF-Feder ausgeführt. Im Gegensatz zu herkömmlichen VF- Expanderfedern / -Biegefedern weist sie an dem unteren Schenkel an der Innenseite keine sich in Axialrichtung erstreckende Radial-Anlagevorsprünge auf. Die VF-Feder liegt dabei mit dem unteren Schenkel eines Z-förmigen Querschnitts oder mit dem End-Schenkel eines U-förmigen Querschnitts an der Außenseite des sich in Axialrichtung erstreckende Axialschenkels des Feder-Stützrings an.

Bei einer zusätzlichen beispielhaften Ausführungsform ist die Expanderfeder / Biegefeder als SS50-Feder ausgeführt. SS-50-Federn sind im Wesentlichen in Radialrichtung gewellte Blechstreifen, die an radial innenliegenden Abschnitten Ausformungen aufweisen, die als Anlagevorsprünge dienen. Bei herkömmlichen SS-50-Federn sind die Anlagevorsprünge gegenüberliegend angeordnet, bei der erfindungsgemäßen Variante der SS-50-Feder sind die Anlagevorsprünge hingegen jedoch nur auf einer, nämlich innen an der Oberseite angeordnet. Es genügt daher lediglich auf einer Seite einer herkömmlichen SS-50-Feder die bisherigen unteren Anlagevorsprünge zu entfernen.

Bei einer weiteren beispielhaften Ausführungsform des mehrteiligen Kolbenrings umfasst der untere Feder-Stützring an Stoßenden eine Eingriffsstruktur, welche die Stoßenden in Axialrichtung und/oder Radialrichtung zueinander ausrichtet. Die Expanderfeder / - Biegefeder kann vor allem bei einem unverschlossenen oberen Abstreifring so stark zusammengedrückt werden, dass sich der Stoßspalt schließt und beide Stoßenden aneinander liegen. Während des Einlaufens könnte es zu einem "Stoßbeißen" und zu einem verstärkten Verschleiß der Stoßenden des Stützrings führen, wenn sich die Stoßenden gegeneinander in Axialrichtung oder Radialrichtung bewegen können. Um dies zu verhindern kann eine Art Nut/Feder- oder Giebel/Kanal-Struktur verwendet werden, um eine derartige Bewegung der Stoßenden zueinander zu verhindern. Hier können die Eingriffsstrukturen sowohl an dem Radialschenkel als auch an dem Axialschenkel angeordnet sein.

Bei einer anderen beispielhaften Ausführung ist eine Radial-Eingriffsstruktur am Radialschenkel vorgesehen, der die Stoßenden des Feder-Stützrings in Radialrichtung ausrichtet.

Bei einer weiteren anderen beispielhaften Ausführung ist eine Axial-Eingriffsstruktur am Axialschenkel vorgesehen, der die Stoßenden in Axialrichtung zueinander ausrichtet.

Bei einer zusätzlichen beispielhaften Ausführung des Kolbenrings ist der untere Feder-Stützring so vorgespannt, dass die Stoßenden aneinander liegen oder gegeneinander gepresst werden. Im Gegensatz zu allen anderen Kolbenringen oder Kolbenringteilen, ist bei dieser Ausführungsform der Stützring komplett geschlossen, und das Stoßspiel beträgt immer 0. Dadurch kann eine definierte Abstützfläche für die Expanderfeder / -Biegefeder bereitgestellt werden. Ein weiterer Vorteil besteht darin, dass es ebenfalls möglich ist zu verhindern, dass eine Radial-Innenseite des Stützrings mit einem Kolbenringnutgrund in Kontakt treten kann.

Der größte Vorteil besteht jedoch darin, dass der Stützring deutlich dünner bzw. flacher ausgeführt werden kann, da er keine Federkraft aufbringen muss um die Expanderfeder / - Biegefeder nach außen zu drücken. In dieser Ausführung können die Kräfte einfach durch den geschlossenen Ring aufgebracht werden. Eine Radiusverringerung wäre, hier nur möglich wenn der Ring in eine Wellenform oder einer Nierenform verformt würde.

Bei der vorstehenden Ausführung kann ausgeschlossen werden, dass der untere Ring bzw. der Stützring mit der Zylinderwand in Kontakt treten kann. Diese Ausführung gestattet eine einfache und leichte Ausführung eines reibungsarmen mehrteiligen Ölabstreifrings.

Weitere Merkmale und Vorteile der vorliegenden Erfindung ergeben sich aus der nachstehenden Beschreibung in Verbindung mit den Zeichnungen, in denen gleiche

Bezugszeichen dieselben oder ähnliche Teile bezeichnen. In den Zeichnungen sind mehrere Ausführungsbeispiele der Erfindung gezeigt. In den Figuren wird die vorliegende Erfindung anhand von nicht maßstabsgerechten, schematischen Darstellung veranschaulicht, die vor allem den Unterschied zu herkömmlichen Ölabstreifringen verdeutlichen sollen.
Figuren 1A bis 1C zeigen verschiedene Ausführungen von herkömmlichen dreiteiligen Ölabstreifringen.
Figur 2A zeigt eine Ausführungsform eines dreiteiligen erfindungsgemäßen Ölabstreifrings in einer Schnittdarstellung gemäß einem ersten Aspekt der vorliegenden Erfindung.
Figuren 2B bis 2C' zeigen verschiedene Ausführungen dreiteiligen von nicht beanspruchten Ölabstreifringen in Schnittansichten .
Figuren 3A bis 3C zeigen verschiedene Ausführungen dreiteiligen von erfindungsgemäßen Ölabstreifringen in Schnittansichten gemäß einem weiteren Aspekt der vorliegenden Erfindung.

Im Folgenden werden sowohl in den Figuren als auch in der Beschreibung gleiche oder ähnliche Bezugszeichen verwendet, um auf gleiche oder ähnliche Elemente oder Komponenten Bezug zu nehmen.

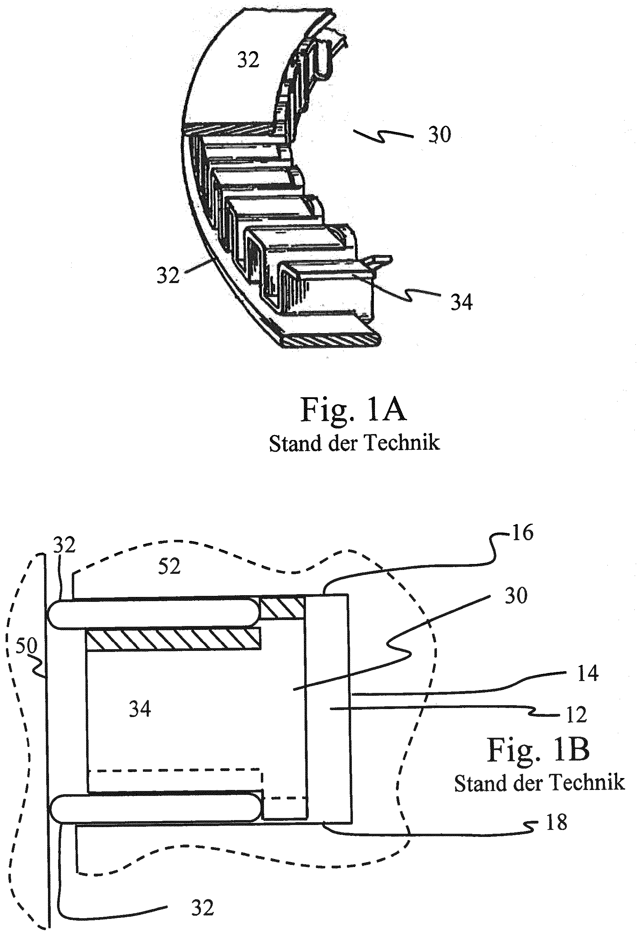

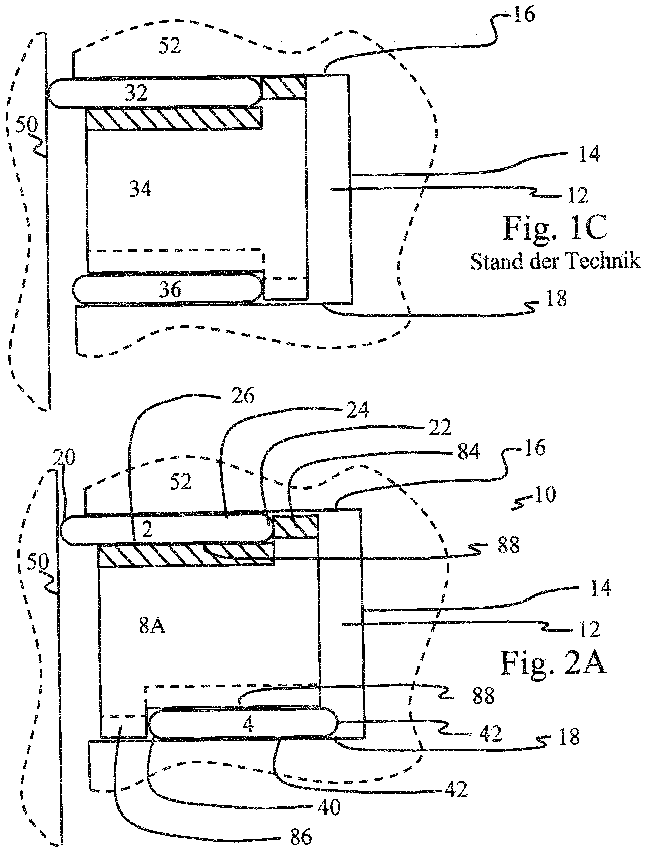

Figur 1 zeigt einen herkömmlichen dreiteiligen Ölabstreifring 30 mit einer in Axialrichtung gewellten MF-Expanderfeder oder MF-Feder in einer perspektivischen Teilansicht. Der herkömmliche dreiteilige Ölabstreifring 30 umfasst zwei Abstreifelemente oder Abstreifringe 32 und einen Expander/Abstandshalter, der als MF-Feder 34 ausgeführt ist, die aus einem elastischen duktilen Metallband bevorzugt einem Stahlband hergestellt ist. Die MF-Feder 34 stellt einen axialen Abstand zwischen den beiden Abstreifringen 32 sicher und drückt diese in gleichem Maße nach außen gegen eine Zylinderinnenwand 50. Das Stahlband ist gewellt und umfasst mehrere gleichmäßig beabstandete Wellen in Axialrichtung. Die gebogenen Stellen der Wellen sind mit Schlitzen versehen, wobei Abschnitte der Wellen abgeplattet sind, um eine Abstützung der Abstreifringe 32 in Axialrichtung zu erreichen. Weitere, nicht abgeplattete Abschnitte der Bögen, die über die abgeflachten Wellenberge überstehen, bilden Vorsprünge, die gegen Innenseiten der Abstreifringe 32 anliegen und diese in Richtung der Zylinderinnenwand 50 nach außen drücken. Die Vorsprünge stellen zudem sicher, dass die MF-Feder 34 nicht mit der Zylinderinnenwand 50 in Kontakt kommt. Die Wellenformen bzw. geraden Abschnitte des Stahlbandes bilden eine umlaufende Reihe von Federelementen, die unter einer Druckbelastung stehen, wenn der dreiteilige Ölabstreifring in die Kolbenringnut eingesetzt ist. Die Enden bzw. Vorsprünge der MF-Feder 32 liegen wie dargestellt jeweils an den Innenseiten Abstreifringe 32 an und drücken sie jeweils gegen die obere Kolbenringflanke 16 bzw. die untere Kolbenringflanke 18. Die Abflachungen können sehr gleichmäßig geformt werden, und die Größe der durch die MF-Feder 34 bereitgestellten Radialkraft kann in dieser Bauform sehr genau eingestellt werden.

Figur 1B zeigt den dreiteiligen Ölabstreifring 30 von Figur 1A eingesetzt in einer Kolbenringnut 12 in einer Schnittansicht. Die Darstellung entspricht der Figur lA, wobei anstelle beider Abstreifringe 32 einen gleichen Außendurchmesser /-radius aufweisen. Die MF-Feder 32 ist als in Axialrichtung gewelltes Metallband ausgeführt das Anlageflächen für beide Abstreifringe 32 umfasst. An dem in Axialrichtung gewellten Metallband sind Vorsprünge vorgesehen, die in Axialrichtung vorstehen und jeweils innen an sowohl den oberen und unteren Abstreifring 32 anliegen und diese nach außen drücken. Dabei treten beide Abstreifringe 32 mit einer Zylinderinnenwand 50 in Kontakt und werden gegen die Zylinderinnenwand 50 gedrückt. In dieser Ausführung streiften beide Abstreifringe 32 Öl von einer Zylinderinnenwand 50 ab.

Figur 1C zeigt einen weiteren dreiteiligen Ölabstreifring 30 mit einer verringerten Reibung mit einer in Axialrichtung gewellten MF-Feder 34 in einer Schnittansicht. Die Darstellung entspricht im Wesentlichen der Figur 1B, wobei anstelle des unteren Abstreifrings ein Stabilisierungsring 36 vorgesehen ist dessen Außendurchmesser /-radius kleiner ist als der des oberen scheibenförmigen Abstreifrings 32. Die MF-Feder ist als in Axialrichtung gewelltes Metallband ausgeführt, das Anlageflächen für den Abstreifring 32 und für den Stabilisierungsring 36 umfasst. An dem in Axialrichtung gewellten Metallband sind Vorsprünge vorgesehen die in Axialrichtung nach oben und unten vorstehen und jeweils innen an sowohl den Abstreifring 32 als auch den Stabilisierungsring 36 anliegen und diese nach außen drücken. Durch unterschiedliche Außendurchmesser / -radien des Abstreifrings 32 und des Stabilisierungsrings 36 steht der Abstreifring 32 um den Radienunterschied zwischen Stabilisierungsring 36 und Abstreifring 32 weiter nach außen vor als der Stabilisierungsring 32. Damit tritt nur der Abstreifring 32 mit einer Zylinderinnenwand 50 in Kontakt oder zumindest wird lediglich der Abstreifring 32 mit einer beträchtlichen Kraft gegen die Zylinderinnenwand 50 gedrückt. In dieser Ausführung streift nur der Abstreifring 32 Öl von einer Zylinderinnenwand 50 ab, während der Stabilisierungsring 36 entweder überhaupt keinen Kontakt mit der Zylinderinnenfläche 60 hat oder nur so leicht von der MF-Feder gegen die Zylinderinnenfläche 50 gedrückt wird, so dass dieser keinen wesentlichen Beitrag zum Abstreifen des Öl leisten kann.

Figur 2A zeigt eine Schnittansicht durch einen erfindungsgemäßen Ölabstreifring 10. Figur 2A zeigt einen erfindungsgemäßen dreiteiligen Ölabstreifring 10 mit einer in Axialrichtung gewellten Expanderfeder / Biegefeder 8 die als MF-Feder 8A ausgeführt ist. Der erfindungsgemäße dreiteilige Ölabstreifring 10 umfasst einen oberen bzw. brennraumseitigen Abstreifring 2, einen unteren Stützring 4 die von der MF-Feder 8A in der Kolbenringnut 12 gehalten werden.

Die MF-Feder 8A liegt mit Anlagestellen 88 an der unteren Flankenfläche 26 des oberen Abstreifrings 2 an und drückt diesen mit der oberen Flankenfläche 24 des oberen Abstreifrings 2 gegen die obere Kolbenringnutflanke 16 der Kolbenringnut 12 in dem Kolben 52. Die MF-Feder 8A liegt mit Anlagestellen 88 an der oberen Flankenfläche 44 des unteren Stützrings 4 an und drückt diesen mit der unteren Flankenfläche 46 des unteren Stützrings 4 gegen die untere Kolbenringnutflanke 18 der Kolbenringnut 12.

Die MF-Feder 8A weist oben, und radial innen Abstreifring-Anlagevorsprünge 84 auf, mit der die MF-Feder 8A von innen gegen die innere Federanlagefläche 22 des oberen Abstreifrings 2 drückt und diesen mit der äußeren Abstreiffläche 20 gegen eine Zylinderinnenfläche 50 drückt.

Die MF-Feder 8A weist unten außen Stützring-Anlagevorsprünge 86 auf, mit der sich die MF-Feder 8A radial nach innen gegen die äußere Federanlagefläche 40 des unteren Stützrings 4 abstützt. Dabei wird der untere Stützring 4 in Richtung des Kolbenringnutgrundes 14 gedrückt. Der untere Stützring 4 kann dabei entweder wie ein herkömmlicher Kolbenring in Richtung eines größeren Durchmessers vorgespannt sein. Es ist jedoch ebenfalls möglich, einen Stützring zu verwenden der eine nach innen gerichtete Vorspannung aufweist. Der Kolbenring wird von der Feder zusammengedrückt. Je nach den herrschenden Kraftverhältnissen können dabei die Stoßenden des Stützrings 4 gegeneinander gepresst werden. Die Radiale Abmessung des Stützrings 4 ist dabei so zu wählen, dass er auch wenn sich die Stoßenden berühren oder aufeinandergepresst werden, die Innenfläche 42 des Stützrings 4 nicht mit dem Nutgrund 14 der Kolbenringnut in Kontakt treten kann. Durch diese Konfiguration wird sichergestellt, dass der Kolbenring allen Bewegungen des Kolbens in dem Zylinder folgen kann, einschließlich Kippbewegungen des Kolbens um die Kolbenbolzenachse.

Im Gegensatz zu der Herkömmlichen MF-Feder 34 von Figur 1A bis 1C weist die MF-Feder der Figur 2A keine T-förmige sondern eher eine Doppel-L-förmige Gestalt auf.

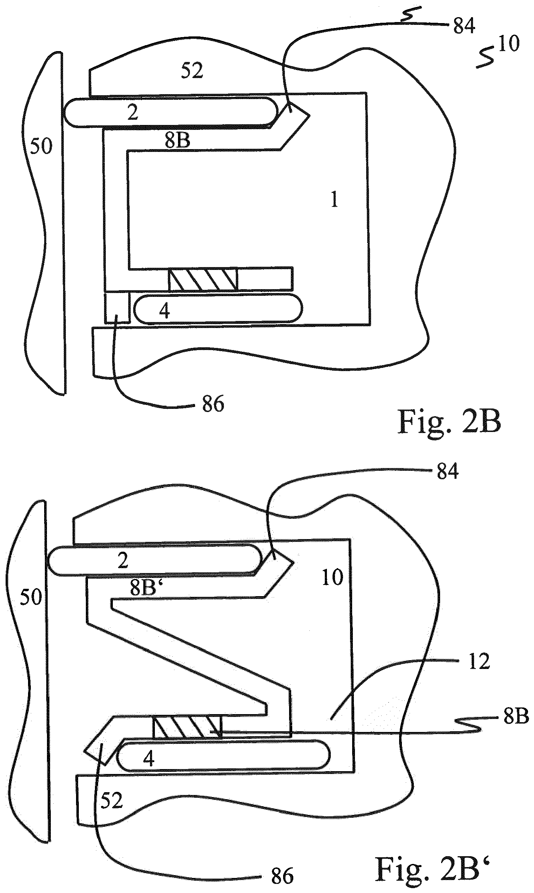

Figur 2B zeigt eine Schnittansicht durch einen erfindungsgemäßen Ölabstreifring. In der Figur 2B zeigt der Ölabstreifring 10 im Wesentlichen die gleiche Konfiguration, eines oberen Abstreifrings 2 und eines unteren Stützrings 4. Wobei eine Expanderfeder / Biegefeder den oberen Abstreifring 2 nach außen oben drückt und den unteren Stützring 4 nach unten innen drückt. Die Expanderfeder / Biegefeder ist in der Figur 2B nicht als MF-Feder sondern als sogenannte VF-Feder 8B ausgeführt. VF-Federn sind im Querschnitt U-Förmig, wobei an den Enden der Schenkel des U nach außen gebogene Abschnitte vorliegen, die jeweils von innen gegen einen oberen bzw. unteren Abstreifring drücken sollen und diese gegen eine Zylinderinnenwand 50 drücken sollen. Der U-förmige Querschnitt öffnet sich bei herkömmlichen VF-Federn radial nach innen in Richtung der Ringachse. Bei der vorliegenden Ausführung ist die U-Form zu einer u-Form abgewandelt, indem der untere Schenkel gerade endet und der für das kleine u typische untere Endstrich hinzugefügt wird. Der untere Endstrich bildet dabei die Stützring-Anlagevorsprünge 86, die von außen gegen den unteren Stabilisierungsring 4 anliegen und diesen in Radialrichtung abstützen.

Diese Ausführung erfordert nur geringe Änderungen an der VF-Feder 8B im Vergleich zu herkömmlichen VF-Federn.

Die VF-Feder 8B liegt an der unteren Flankenfläche des oberen Abstreifrings 2 an und drückt diesen mit seiner oberen Flankenfläche gegen die obere Kolbenringnutflanke der Kolbenringnut 12 in dem Kolben 52. Die VF-Feder 8B liegt mit Anlagestellen der oberen Flankenfläche des unteren Stützrings 4 an und drückt diesen mit seiner unteren Flankenfläche gegen die untere Kolbenringnutflanke der Kolbenringnut 12.

Die VF-Feder 8B weist oben und radial innen Abstreifring-Anlagevorsprünge 84 auf, mit der die VF-Feder 8B von innen gegen die innere Federanlagefläche des oberen Abstreifrings 2 drückt und diesen mit der äußeren Abstreiffläche gegen eine Zylinderinnenfläche 50 drückt.

Die VF-Feder 8B weist unten und radial außen Stützring-Anlagevorsprünge 86 auf, mit der sich die VF-Feder 8B radial nach innen gegen die äußere Federanlagefläche des unteren Stützrings 4 abstützt. Dabei wird der untere Stützring 4 radial in Richtung des Kolbenringnutgrundes 14 gedrückt.

Im Gegensatz zu einer Herkömmlichen VF-Feder weist die MF-Feder von Figur 2B keine inneren unteren radial-Anlageflächen 86 auf sondern ist mit den Stützring-Anlagevorsprüngen 86 versehen. Anstelle eines U-förmigen Querschnitts weist die VF-Feder einen u-förmigen Querschnitt auf, wobei die radial-Anlageflächen nicht radial innen nach unten vorspringen sondern radial außen nach unten vorspringende radial-Anlageflächen 86 bilden.

Figur 2B' zeigt eine Schnittansicht durch eine weitere Ausführungsform eines nicht beanspruchten Ölabstreifrings. Der einzige Unterscheid zur Figur 2B besteht darin, dass eine andere Form von VF-Feder eingesetzt wird. Die VF-Feder 8B' ist im Querschnitt im Wesentlichen Z-förmig ausgeführt, wobei an den Enden der Waagerechten Schenkeln des Z die radial-Anlageflächen angeordnet sind. Ausgehend von den üblicherweise U-förmigen VF-Federn werden hier nur die Winkel zwischen den waagerecht und senkrecht bzw. schräg verlaufenden Schenkeln verändert. Die radial-Anlageflächen 84 und 86 können so wie bei herkömmlichen VF-Federn gebogen sein. Die Kräfte die von der VF-Feder 8B' auf den Abstreifring 2 bzw. Stützring 4 ausgeübt werden, können durch die Abmessungen der Komponenten der VF-Feder 8B' eingestellt werden. Die VF-Feder 8' der Figur 2B' sollte sich einfacher und mit weniger Änderungen aus einer herkömmlichen VF-Feder ableiten lassen.

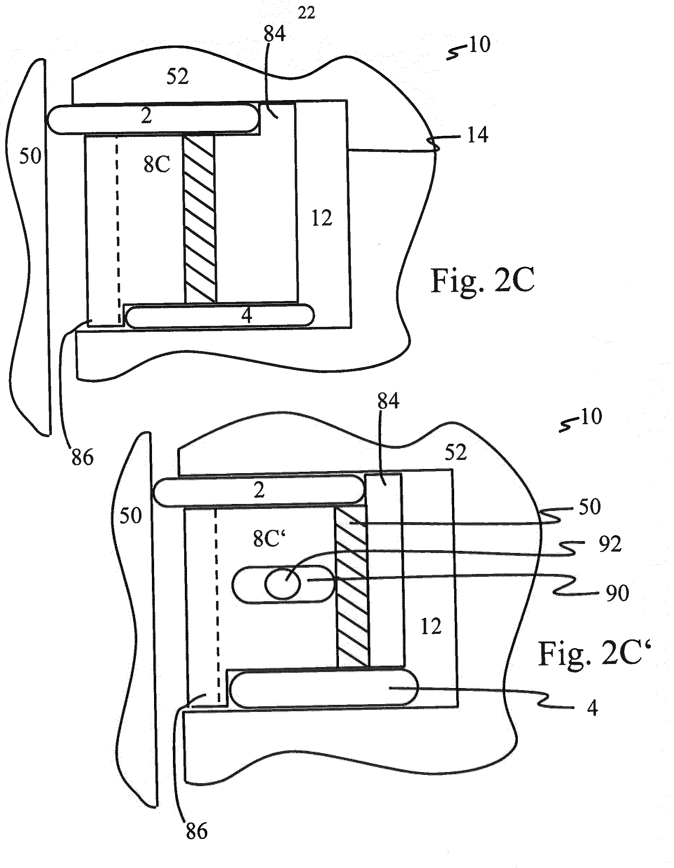

Figur 2C stellt eine Schnittansicht durch eine zusätzliche Ausführungsform eines nicht beanspruchten Ölabstreifrings dar. In der Figur 2B zeigt der Ölabstreifring 10 im Wesentlichen die gleiche Konfiguration, eines oberen Abstreifrings 2 und eines unteren Stützrings 4 wie in den Figuren 2A bis 2B'. Die die Expanderfeder / Biegefeder drückt den oberen Abstreifring 2 nach außen und oben und den untere Stützring 4 nach unten innen drückt. Die Expanderfeder / Biegefeder ist in der Figur 2B nicht als MF- oder VF-Feder sondern als sogenannte SS-50-Feder 8C ausgeführt. SS-50-Feder-Federn sind aus einem Blechstreifen gebogen / geformt der parallel zu der Axialrichtung verläuft und in Radialrichtung gewellt ist. Die herkömmliche SS-50-Feder weist an den Stellen mit den kleinsten Radialabstand zu der Kolbenringachse in Axialrichtung vorstehende Vorsprünge auf, die jeweils innen an den herkömmlichen Abstreifringen anliegen und diese nach außen drücken sollen. Daraus ergibt sich ein Blechstreifen der gegenständig angeordnete Vorsprünge aufweist, die Form erinnert an die historischer Hakenleitern bei denen sich die Sprossen nach kreuzförmig von einem Zentralholm ausgehen. Bei der erfindungsgemäßen Ausführung sind die linken und rechten Sprossen zueinander versetzt, wie bei modernen "Steigbäumen" sodass die inneren wie herkömmlich innen an dem Abstreifring anliegen können währen die äußeren außen am dem Stützring anliegen. Die oberen Anlagevorsprünge drücken jeweils von innen gegen einen oberen Abstreifring und erhöhen den Druck des oberen Abstreifrings 4 auf die Zylinderinnenwand 50. Die unteren äußeren Vorsprünge gestatten es, dass sich die SS-50-Feder unten gegen den unteren Stützring 4 abstützt.

Auch diese Ausführung erfordert nur geringe Änderungen an der SS-50-Feder 8C im Vergleich zu herkömmlichen SS50-Federn, da lediglich die Stanz- bzw. Schneidvorrichtungen die die SS-50-Feder aus einem Stahlband schneiden gegeneinander versetzt werden müssen. Im Idealfall genügt es eine Seite der Stanzvorrichtung zu verändern. Das Welligbiegen kann dabei mit herkömmlichen Maschinen für SS-50-Federn ausgeführt werden.

Figur 2C' zeigt eine Schnittansicht durch eine weitere Ausführungsform eines nicht beanspruchten Ölabstreifrings. Der einzige Unterscheid zur Figur 2C besteht darin, dass die SS-50-Feder 8D zusätzlich mit Öffnungen 90 in Umfangsrichtung versehen ist, in denen ein umlaufender Stabilisierungsdraht 92 angeordnet ist. Der Stabilisierungsdraht kann die Montage vereinfachen und die Stabilität des Ölabstreifrings erhöhen.

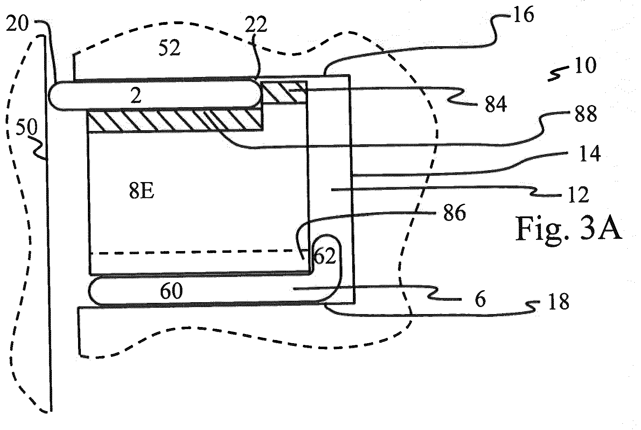

Figur 3A zeigt eine Schnittansicht durch einen erfindungsgemäßen Ölabstreifring 10. Figur 3A zeigt einen erfindungsgemäßen dreiteiligen Ölabstreifring 10 mit einer in Axialrichtung gewellten Expanderfeder / Biegefeder 8 die als MF-Feder 8E ausgeführt ist. Der erfindungsgemäße dreiteilige Ölabstreifring 10 umfasst einen oberen bzw. brennraumseitigen Abstreifring 2, einen unteren Feder-Stützring 6 die von der MF-Feder 8E in der Kolbenringnut 12 gehalten werden.

Der Feder-Stützring 6 der Figur 3A unterscheidet sich von dem Stützring 4 der Figur 2A dadurch, dass der Feder-Stützring 6 im Querschnitt L-förmig ist, wobei der waagerechte Schenkel bzw. der Radialschenkel 60 des unteren Feder-Stützrings 6 als Abstützfläche für die MF-Feder 6D dient, während der Axialschenkel 62 des unteren Feder-Stützrings 6 dazu dient eine Anlagefläche bzw. einen Anlagefläche für die untere innere Kante bzw. Ecke der MF-Feder 6D bereitzustellen. Durch diese Ausführung kann der untere Anlagevorsprung an den der MF-Feder wie er in Figur 2A dargestellt ist weggelassen werden. In dieser Ausführung ist die Unterseite der MF-Feder 6E einfach nur flach und der untere Feder-Stützring 6 kann die Kräfte in Axialrichtung und Radialrichtung aufnehmen. Die Oberseite der MF-Feder hingegen ist genauso ausgeführt wie in der Figur 2A. In dieser Ausführung kann die MF-Feder deutlich einfacher hergestellt werden, während lediglich die Querschnittsform des unteren Feder-Stützrings 6 von eben zu L-förmig geändert werden muss.

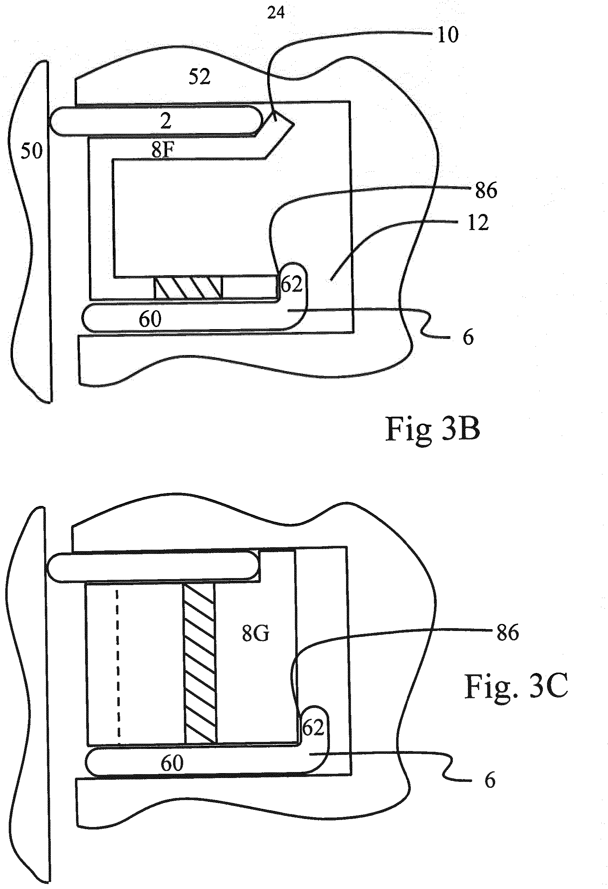

Die Figur 3B stellt eine Version des Ölabstreifrings von Figur 2B mit dem unteren Feder-Stützring 6 von Figur 3A dar. Die VF-Feder der Figur 2B wurde dahingehend angepasst, dass die unteren äußeren Anlagevorsprünge 86 weggelassen wurden, da die Feder sich mit ihrer unteren inneren Kante an dem Axialschenkel 62 des unteren Feder-Stützrings 6 abstützen kann. Die VF-Feder 8F der Figur 3B lässt sich damit noch leichter herstellen.

Die Figur 3C stellt eine Version des Ölabstreifrings von Figur 2C mit dem unteren Feder-Stützring 6 von Figur 3A bzw. 3B dar. Die SS-50-Feder der Figur 2 wurde dahingehend angepasst, dass die unteren äußeren Anlagevorsprünge 86 weggelassen wurden, da die Feder sich mit ihrer unteren inneren Kante an dem Axialschenkel 62 des unteren Feder-Stützrings 6 abstützen kann. Die SS-50-F-Feder 8G der Figur 3B lässt sich damit noch leichter herstellen. Es genügt dazu lediglich bei einer klassischen SS-50-Feder die unteren Anlagevorsprünge zu entfernen.

### Bezugszeichenliste

- 2: oberer Abstreifring
- 4: unterer Stützring
- 6: Feder-Stützring
- 8: Expanderfeder / Biegefeder
- 8A: MF-Feder
- 8B: VF-Feder
- 8B': Z-förmige VF-Feder
- 8C: SS-50-Feder
- 8C': SS-50-Feder mit Stabilisierungsdraht

- 10: Mehrteiliger Kolbenring

- 12: Kolbenringnut
- 14: Kolbenringnutgrund
- 16: obere Kolbenringnutflanke
- 18: untere Kolbenringnutflanke

- 20: äußeren Abstreiffläche /-kante des oberen Abstreifrings
- 22: inneren Federanlagefläche des oberen Abstreifrings
- 24: obere Flankenfläche des oberen Abstreifrings
- 26: untere Flankenfläche des oberen Abstreifrings

- 30: herkömmlicher Kolbenring
- 32: herkömmliche obere / untere Abstreifringe
- 34: herkömmliche MF-Feder
- 36: herkömmlicher unterer Stabilisierungsring

- 40: äußere Federanlagefläche des unteren Stützrings
- 42: Innenfläche des unteren Stützrings
- 44: obere Flankenfläche des unteren Stützrings
- 46: untere Flankenfläche des unteren Stützrings

- 50: Zylinderinnenfläche
- 52: Kolben

- 60: Radialschenkel des unteren Feder-Stützrings
- 62: Axialschenkel des unteren Feder-Stützrings
- 64: obere Flankenfläche des Radialschenkels des unteren Feder-Stützrings
- 66: untere Flankenfläche des Radialschenkels des unteren Feder-Stützrings
- 68: äußere Federanlagefläche des Axialschenkels des unteren Feder-Stützrings

- 80: Oberseite der Expanderfeder / Biegefeder
- 82: Unterseite der Expanderfeder / Biegefeder
- 84: Abstreifring-Anlagevorsprünge
- 86: Stützring-Anlagevorsprünge.
- 88: Anlagestellen

- 90: Öffnung
- 92: Stabilisierungsdraht

## Patentansprüche

1. Mehrteiliger Kolbenring (10) umfassend,
einen oberen Abstreifring (2) mit zwei Flankenflächen (24, 26), einer äußeren Abstreiffläche (20) und einer inneren Federanlagefläche (22),
einen unteren Stützring (4), mit zwei Flankenflächen (44, 46), mit einer äußeren Federanlagefläche (40), und einer Stützring-Innenfläche (42), sowie eine Expanderfeder (8), die an einer Ober- und Unterseite (80,82) an jeweils einer unteren Flankenfläche (26) des oberen Abstreifrings (2) und an der oberen Flankenfläche (44) des Stützrings (4) anliegen soll, sowie an einer Federinnenseite nach oben überstehende Abstreifring-Anlagevorsprünge (84) und an einer Federaußenseite nach unten überstehende Stützring-Anlagevorsprünge (86) aufweist,
**dadurch gekennzeichnet, dass** die Expanderfeder (8) als MF-Feder (8A) ausgeführt ist.

2. Mehrteiliger Kolbenring (10) nach Anspruch 1, wobei Stoßenden mit einer Eingriffsstruktur versehen sind, die die Stoßenden in Axialrichtung und/ oder Radialrichtung zueinander ausrichten.

3. Mehrteiliger Kolbenring (10) nach Anspruch 1, wobei
der untere Stützring (4), so vorgespannt ist, dass Stoßenden aneinander liegen oder gegeneinander gepresst werden.

4. Mehrteiliger Kolbenring (10) umfassend,
einen oberen Abstreifring (2) mit zwei Flankenflächen (24, 26), einer äußeren Abstreiffläche (20) und einer inneren Federanlagefläche (22),
einen unteren Feder-Stützring (6), mit einem im Querschnitt L-Förmigen Querschnitt, wobei sich ein Radialschenkel (60) in Radialrichtung und im Wesentlichen parallel zu dem oberen Abstreifring (2) erstreckt, und ein Axialschenkel (62) in Axialrichtung verläuft, wobei der Axialschenkel (62) an einer Innenseite des Feder-Stützrings (6) angeordnet ist und sich nach oben in Richtung der Expanderfeder (8) erstreckt, und wobei eine Axialschenkelaußenseite in Radialrichtung gesehen eine Federanlagefläche (68) bildet, und
eine Expanderfeder (8), die an einer Ober- und Unterseite (80, 82) an jeweils einer unteren Flankenfläche (26) des oberen Abstreifrings (2) und an der oberen Flankenfläche (64) des Feder-Stützrings (6) anliegen soll, wobei die Expanderfeder (8) an einer Federinnenseite nach oben überstehende Abstreifring-Anlagevorsprünge (84) aufweist, sowie an einer Federinnenseite unten eine Kante (88) aufweist, die an dem Axialschenkel (62) anliegen kann.

5. Mehrteiliger Kolbenring (10) nach Anspruch 4,
wobei die Expanderfeder (8) als MF-Feder (8E) ausgeführt ist.

6. Mehrteiliger Kolbenring (10) nach Anspruch 4,
wobei die Expanderfeder (8) als VF-Feder (8F) ausgeführt ist.

7. Mehrteiliger Kolbenring (10) nach Anspruch 4,
wobei die Expanderfeder (8) als SS50-Feder (8G) ausgeführt ist.

8. Mehrteiliger Kolbenring (10) nach einem der Ansprüche 4 bis 7, wobei Stoßenden mit einer Eingriffsstruktur versehen sind, die die Stoßenden in Axialrichtung und oder Radialrichtung zueinander ausrichten.

9. Mehrteiliger Kolbenring (10) nach Anspruch 8, wobei eine Radial-Eingriffsstruktur am Radialschenkel (6) Stoßenden des Feder-Stützrings (6) in Radialrichtung ausrichtet und /oder wobei eine Axial-Eingriffsstruktur am Axialschenkel (62) die Stoßenden in Axialrichtung zueinander ausrichtet.

10. Mehrteiliger Kolbenring (10) nach einem der Ansprüche 4 bis 9, wobei der untere Feder-Stützring (6) so vorgespannt ist, dass Stoßenden aneinander liegen oder gegeneinander gepresst werden.

## Claims

1. A multi-piece piston ring (10) comprising
an upper scraper ring (2) comprising two flank surfaces (24, 26), an outer scraping surface (20), and an inner spring contact surface (22),
a lower support ring (4) comprising two flank surfaces (44, 46), comprising an outer spring contact surface (40), and a support ring inner surface (42), as well as
an expander spring (8), which, on an upper and lower side (80, 82), is to abut against a respective lower flank surface (26) of the upper scraper ring (2) and against the upper flank surface (44) of the support ring (4), as well as has scraper ring contact projections (84) protruding upwards on an inner spring side, and support ring contact projections (86) protruding downwards on an outer spring side,
**characterized in that**
the expander spring (8) is embodied as MF spring (8A).

2. The multi-piece piston ring (10) according to claim 1, wherein joint ends are provided with an engagement structure, which align the joint ends to one another in the axial direction and / or radial direction.

3. The multi-piece piston ring (10) according to claim 1, wherein
the lower support ring (4) is preloaded such that the joint ends adjoin one another or are pushed against one another.

4. A multi-piece piston ring (10) comprising
an upper scraper ring (2) comprising two flank surfaces (24, 26), an outer scraping surface (20), and an inner spring contact surface (22),
a lower spring support ring (6) comprising an L-shaped cross section in cross section, wherein a radial leg (60) extends in the radial direction and essentially parallel to the upper scraper ring (2), and an axial leg (62) runs in the axial direction, wherein the axial leg (62) is arranged on an inside of the spring support ring (6) and extends upwards in the direction of the expander spring (8), and
wherein, viewed in the radial direction, an axial leg outer side forms a spring contact surface (68), and
an expander spring (8), which, on an upper and lower side (80, 82), is to abut against a respective lower flank surface (26) of the upper scraper ring (2) and against the upper flank surface (64) of the spring support ring (6), wherein the expander spring (8) has scraper ring contact projections (84) protruding upwards on an inner spring side, as well as on the bottom on an inner spring side has an edge (88), which can abut against the axial leg (62).

5. The multi-piece piston ring (10) according to claim 4,
wherein the expander spring (8) is embodied as MF spring (8E).

6. The multi-piece piston ring (10) according to claim 4,
wherein the expander spring (8) is embodied as VF spring (8F).

7. The multi-piece piston ring (10) according to claim 4,
wherein the expander spring (8) is embodied as SS50 spring (8G).

8. The multi-piece piston ring (10) according to one of claims 4 to 7, wherein joint ends are provided with an engagement structure, which align the joint ends to one another in the axial direction and or radial direction.

9. The multi-piece piston ring (10) according to claim 8, wherein a radial engagement structure at the radial leg (6) aligns joint ends of the spring support ring (6) in the radial direction and / or wherein an axial engagement structure at the axial leg (62) aligns the joint ends to one another in the axial direction.

10. The multi-piece piston ring (10) according to one of claims 4 to 9,
wherein the lower spring support ring (6) is preloaded such that joint ends adjoin one another or are pushed against one another.

## Revendications

1. Segment de piston en plusieurs parties (10) comprenant
un segment racleur supérieur (2) avec deux surfaces de flanc (24, 26), une surface de raclage extérieure (20) et une surface intérieure de contact de ressort (22),
une bague de support inférieure (4) avec deux surfaces de flanc (44, 46), avec une surface extérieure de contact de ressort (40) et une surface intérieure de bague de support (42), et un ressort d'expansion (8), qui vient reposer sur un côté supérieur et inférieur (80, 82) sur respectivement une surface de flanc inférieure (26) du segment racleur supérieur (2) et la surface de flanc supérieure (44) de l'anneau de support (4), et présente sur un côté inférieur de ressort des protubérances de contact de segment racleur faisant saillie vers le haut (84) et sur un côté extérieur de ressort présente des saillies de contact de bague de support (86) faisant saillie vers le bas,
**caractérisé en ce que**
le ressort d'expansion (8) est réalisé sous la forme d'un ressort MF (8A).

2. Segment de piston en plusieurs parties (10) selon la revendication 1, dans lequel
les extrémités en butée sont pourvues d'une structure de mise en prise, qui aligne les extrémités en butée dans la direction axiale et/ou dans la direction radiale les unes par rapport aux autres.

3. Segment de piston en plusieurs parties (10) selon la revendication 1, dans lequel
la bague de support inférieure (4) est précontrainte de manière à ce que des extrémités en butée soient en butée l'une contre l'autre ou en appui l'une contre l'autre.

4. Segment de piston en plusieurs parties (10) comprenant
un segment racleur supérieur (2) avec deux surfaces de flanc (24, 26), une surface de raclage extérieure (20) et une surface intérieure de contact de ressort (22),
une bague de support de ressort inférieure (6) avec une section transversale en forme de L, dans lequel un pan radial (60) s'étend dans la direction radiale et essentiellement parallèlement au segment racleur supérieur (2), et un pan axial (62) dans la direction axiale, dans lequel le pan axial (62) est agencé sur un côté intérieur de la bague de support de ressort (6) et s'étend vers le haut dans la direction du ressort d'expansion (8), et
dans lequel un côté extérieur de pan axial vue dans la direction radiale forme une surface de contact de ressort (68), et
un ressort d'expansion (8), qui vient reposer sur un côté supérieur et inférieur (80, 82) sur une surface de flanc inférieure respective (26) du segment racleur supérieur (2) et sur la surface de flanc supérieure (64) de la bague de support de ressort (6), dans lequel le ressort d'expansion (8) présente des protubérances de contact de segment racleur faisant saillie vers le haut (84), ainsi qu'un bord (88) sur un côté intérieur de ressort en bas, qui peut venir reposer contre le pan axial (62).

5. Segment de piston en plusieurs parties (10) selon la revendication 4,
dans lequel le ressort d'expansion (8) est conçu comme un ressort MF (8E).

6. Segment de piston en plusieurs parties (10) selon la revendication 4,
dans lequel le ressort d'expansion (8) est conçu comme un ressort VF (8F).

7. Segment de piston en plusieurs parties (10) selon la revendication 4,
dans lequel le ressort d'expansion (8) est conçu comme un ressort SS50 (8G).

8. Segment de piston en plusieurs parties (10) selon une quelconque des revendications 4 à 7, dans lequel les extrémités en butée sont pourvus d'une structure de mise en prise, qui aligne les extrémités en butée dans la direction axiale et/ou la direction radiale les unes par rapport aux autres.

9. Segment de piston en plusieurs parties (10) selon la revendication 8, dans lequel une structure de mise en prise radiale aligne radialement les extrémités en butée de la bague de support de ressort (6) sur le pan radial (6), et/ou dans lequel une structure de mise en prise axiale sur le pan axial (62) aligne axialement les extrémités en butée les unes par rapport aux autres.

10. Segment de piston en plusieurs parties (10) selon une quelconque des revendications 4 à 9, dans lequel la bague de support de ressort inférieure (6) est précontrainte de sorte que les extrémités en butée soient en contact ou soient pressées l'une contre l'autre.
